# EUROPEAN PATENT APPLICATION

(11) **EP 4 663 007 A1**
(43) Date of publication of application: **17.12.2025**
(21) Application number: 23921255.8
(22) Date of filing: 19.09.2023
(51) Int. Cl.: A01G 24/15, A01G 22/05, A01G 31/00

(54) **PLANT CULTIVATION METHOD AND CULTIVATION SYSTEM**

(30) Priority: 07.02.2023 JP 2023016700
(71) Applicant: Daifuku Co., Ltd., Osaka-shi, Osaka 555-0012 (JP)
(72) Inventor: WASHIO Naoki, Gamo-gun Shiga 529-1692 (JP); MATSUMOTO Rika, Gamo-gun Shiga 529-1692 (JP); KITA Nobuyuki, Gamo-gun Shiga 529-1692 (JP); YAJIMA Hiromu, Gamo-gun Shiga 529-1692 (JP); ANNO Kanji, Gamo-gun Shiga 529-1692 (JP)
(74) Representative: Becker, Eberhard
(86) International application number: PCT/JP2023/033974
(87) International publication number: WO 2024/166430

(57) **Abstract**

Provided is a plant cultivation method suitable for growing plants in a plant factory and also enabling the acquisition of fruits with good quality. The plant cultivation method includes: growing the plants from seeds by hydroponics from germination to before fruit formation, i.e., until a predetermined medium switching time; and, when the medium switching time comes, moving the plants to a medium where a foamed brick stone is used as a planting material and continuing growing the plants by hydroponics.

## Description

### Technical Field

The present invention relates to a plant cultivation method and a cultivation system.

### Background Art

In recent years, with global climate change and population increase, there has been growing interest in plant factories that contribute to stable supply of food. A plant factory is a production system that creates environmental conditions necessary for the growth of plants within a facility to grow plants in a planned and stable manner. In such plant factories, cultivation approaches such as hydroponics that grow plants with, for example, water and liquid fertilizer (nutrient solution) without using soil are widely used. Conventional examples related to hydroponics include, for example, those disclosed in Patent Document 1 and Patent Document 2.

### Related Art Documents

### Patent Documents

Patent Document 1: Japanese Patent Application Laid-Open No. 2010-94101
Patent Document 2: Japanese Patent No. 7064768

### SUMMARY OF INVENTION

### Problem to Be Solved by Invention

Hydroponics is very suitable as a cultivation approach in a plant factory because soil preparation for growing plants is not required, plant diseases and pests originating from soil can be prevented, and further, it is easy to stabilize the quality of plants. However, generally, in the case of hydroponics, there is a problem that algae easily develop. In particular, fruits such as strawberries are easily attached with surrounding odors, and if algae odor is attached to the fruits, there is a risk that high-quality fruits cannot be obtained.

In view of the above problems, it is an objective of the present invention to provide a cultivation method of a plant that is suitable for cultivation of plants in a plant factory and makes it possible to obtain high-quality fruits, and a cultivation system capable of being used for implementing the cultivation method.

### Means for Solving Problem

A cultivation method of a plant according to the present invention is a method including: growing the plant from a seed by hydroponics, until a specific medium switching time from germination to before fruit formation; and, in response to coming of the medium switching time, moving the plant to a medium taking clay pebbles as a planting material to continue growing the plant by hydroponics.

According to this method, it is suitable for cultivation of plants in a plant factory, and it becomes possible to obtain high-quality fruits.

More specifically, as the above method, the planting material may include the clay pebbles of different sizes mixed together. In addition, more specifically, as the method, the planting material may include the clay pebbles, which are irregularly shaped and of different sizes within a range of 2 to 4 mm, mixed together. The size related to the clay pebbles in this application corresponds to a diameter (diameter size) of a sphere of equivalent volume.

More specifically, as the above method, the method may include a process of baking used clay pebbles, and the baked clay pebbles may be reused as the planting material. In addition, more specifically, as the above method, after the plant is moved to the medium, pollination may be performed using a pollinator. Furthermore, more specifically, as the above method, the plant may be strawberry.

In addition, a cultivation system according to the present invention may be a cultivation system used for the above cultivation method, and may include: the medium, and a drainage path disposed below the medium. A drainage net with a size of a mesh that does not allow the clay pebbles to pass through may be disposed between the medium and the drainage path. In addition, a cultivation system according to the present invention may be a cultivation system provided in a room having an air conditioner and used for the above cultivation method. The cultivation system may be provided with a pre-filter with a finer mesh than an air conditioning filter of the air conditioner. Air in the room that is drawn into the air conditioner may pass through the pre-filter before passing through the air conditioning filter.

### Effects of Invention

According to the cultivation method of a plant related to the present invention, it is suitable for cultivation of plants in a plant factory, and it becomes possible to obtain high-quality fruits.

### BRIEF DESCRIPTION OF THE DRAWINGS

[FIG. 1] is a view illustrating facilities related to a plant cultivation system according to this embodiment.
[FIG. 2] is view illustrating a configuration outline of each tier in a cultivation shelf according to this embodiment.
[FIG. 3] is a flowchart of a cultivation process of strawberries according to this embodiment.
[FIG. 4] is a view illustrating the cultivation shelf according to the present invention with strawberry seedlings planted.

### EMBODIMENTS FOR IMPLEMENTING INVENTION

A cultivation method of a plant according to an embodiment of the present invention and a plant cultivation system used for implementing the cultivation method will be described below with reference to each drawing. In this embodiment, strawberry is adopted as an example of the plant to be cultivated. However, the cultivation target (plant) according to the present invention is not limited thereto, and plants other than strawberry may also be adopted as long as such an adoption does not deviate from the gist of the present invention.

### [Overview of plant cultivation system]

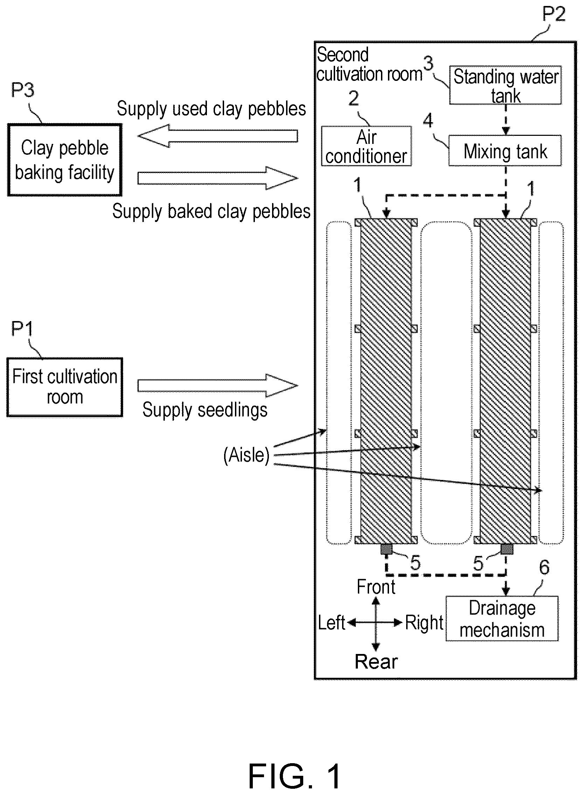

FIG. 1 schematically shows facilities related to the plant cultivation system according to this embodiment. As shown in this figure, the main facilities related to the plant cultivation system include a first cultivation room P1, a second cultivation room P2, and a clay pebble baking facility P3. The specific locations and the like of these facilities are not particularly limited, and some or all of the facilities may be provided within the same premises.

The first cultivation room P1 is a facility for growing strawberries from seeds to seedlings (a state from germination to before fruit formation). In the first cultivation room P1, strawberries are grown from seeds to seedlings by hydroponics using seedling raising materials. Thus, the environment of the first cultivation room P1 is desirably set to a state suitable for hydroponics in this form.

The second cultivation room P2 is a facility to which strawberries grown to seedlings are supplied from the first cultivation room P1 to be further grown in a medium for hydroponics using clay pebbles as a planting material.

The clay pebble baking facility P3 is a facility to which used clay pebbles are supplied from the second cultivation room P2 and which bakes the clay pebbles using a kiln. The baked clay pebbles are supplied again to the second cultivation room P2 and reused as the planting material.

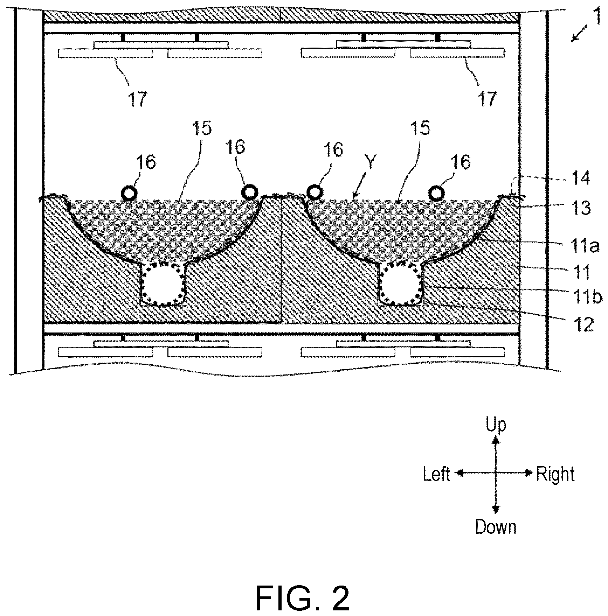

Next, a specific configuration of the second cultivation room P2 will be described. The second cultivation room P2 includes cultivation shelves 1, an air conditioner 2, a standing water tank 3, a mixing tank 4, trapping members 5, and a drainage mechanism 6. In addition, FIG. 2 shows a cross-sectional view of a configuration outline of one of the tiers of the cultivation shelf 1 as viewed in a front-rear direction. Each tier of the cultivation shelf 1 is provided with a cultivation container 11, a waterproof sheet 12, a mesh pipe 13, a drainage net 14, a medium 15, irrigation tubes 16, and a lighting device 17.

The cultivation shelf 1 is in a form of a multi-tier rack (e.g., a three-tier rack) extending long in the front-rear direction, and is provided with aisles (locations shown by dotted frames in FIG. 1) on left and right sides thereof allowing an operator to passing through. Cultivation containers 11 with equivalent configurations are respectively disposed on each tier of the cultivation shelf 1. Front-rear, left-right, and up-down directions (directions orthogonal to each other) of the cultivation shelf 1 are as shown in FIG. 1 and FIG. 2. In the example shown in FIG. 2, the bottom plate and the top plate of tiers adjacent in the up-down direction are common plate materials, but may also be respectively separate plate materials.

The air conditioner 2 adjusts the overall temperature and humidity in the second cultivation room P2 to a state suitable for cultivation of strawberries. The standing water tank 3 is capable of storing raw water (tap water), and serves roles such as water temperature control of raw water which varies with seasons, in addition to chlorine removal from raw water. The mixing tank 4 is disposed downstream of the standing water tank 3, and serves a role of mixing fertilizer with the raw water sent out from the standing water tank 3, adjusting the pH (hydrogen ion index), and generating a nutrient solution.

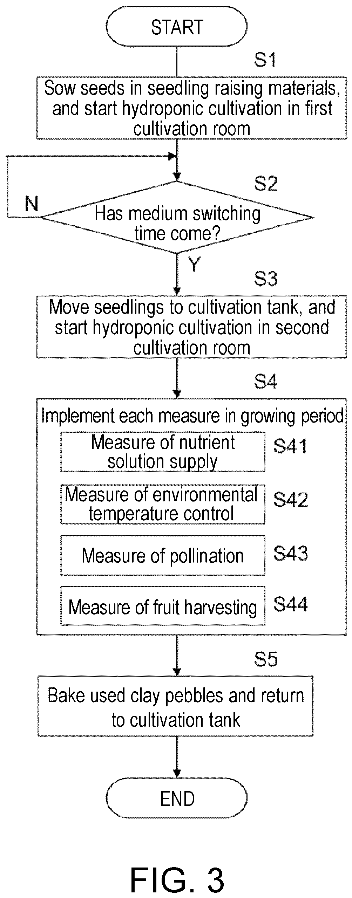

The nutrient solution generated in the mixing tank 4 is sent to the irrigation tubes 16 of each tier of the cultivation shelf 1. When nutrient solution supply (refer to step S41 in FIG. 3) to be described later is performed, the nutrient solution generated in this manner is supplied to the medium 15 via the irrigation tubes 16.

The trapping member 5 is a member that traps the nutrient solution supplied from the irrigation tubes 16 to the medium 15 at each tier of the cultivation shelf 1, and enables bottom watering in the medium 15. A tubular body (e.g., a PVC pipe) disposed to extend in the up-down direction at a rear end of each cultivation container 11 is adopted as the trapping member 5 in this embodiment.

With the trapping member 5 set at the rear end of the cultivation container 11, the nutrient solution in the cultivation container 11 of each tier flows into the trapping member 5 from the lower side, and in the case of overflowing from the upper part of the trapping member 5, the overflowing portion is discharged. Thus, in the cultivation container 11 (medium 15), the nutrient solution is trapped until a water depth of a height equivalent to the upper part of the trapping member 5. The trapping member 5 is detachably provided at the rear end of the cultivation container 11, and with the tubular body removed, the nutrient solution is not trapped, and the nutrient solution is capable of being all discharged from the cultivation container 11.

The drainage mechanism 6 is disposed at a position into which the nutrient solution and the like discharged from the cultivation container 11 ultimately flow, and is configured to be capable of draining the discharged nutrient solution and the like to outside of the second cultivation room P2.

Next, a configuration of each tier of the cultivation shelf 1 will be described in more detail mainly with reference to FIG. 2. As shown in FIG. 2, the configuration of each tier of the cultivation shelf 1 is basically left-right symmetrical. Hereinafter, the configuration of each tier of the cultivation shelf 1 will be described for the right half of the configuration, and description of the left half of the configuration will be omitted.

The cultivation container 11 has a rectangular parallelepiped shape that is long in the front-rear direction and provided with a first recess 11a and a second recess 11b, and is disposed on the bottom plate of each tier of the cultivation shelf 1. The first recess 11a is provided in a region toward the upper side of the rectangular parallelepiped, and has a generally semicircular shape (a semicircular shape that extends downward as it extends from both sides in the left-right direction toward the center) as viewed from the rear side. The second recess 11b is formed to further recess downward from the center in the left-right direction of the first recess 11a, and has a generally square shape as viewed from the rear side. In the cultivation container 11, the first recess 11a is mainly used as a space for providing the medium 15, and the second recess 11b is mainly used as a drainage path for draining the nutrient solution and the like.

The waterproof sheet 12 is a sheet-shaped member formed of a material that does not allow water to pass through, and is disposed along the surface (including the surfaces of the first recess 11a and the second recess) of the cultivation container 11 to cover the entire upper side of the surface. The waterproof sheet 12 serves a role of preventing leakage of the nutrient solution and the like from the cultivation container 11.

The mesh pipe 13 is a cylindrical pipe extending in the front-rear direction, with the entire sidewall being in a mesh shape allowing water to pass through. The mesh pipe 13 is disposed along the drainage path to serve a role of improving drainage and ventilation. For example, a Trical pipe (registered trademark: manufactured by C.I. TAKIRONCIVIL Corporation) may be adopted as the mesh pipe 13. The mesh pipe 13 is fitted into the second recess 11b covered with the waterproof sheet 12, and the up-down position of the upper end of the mesh pipe 13 approximately coincides with the up-down position of the lower end of the first recess 11a.

The drainage net 14 is a sheet-shaped net member that allows water to pass through, and is disposed to cover the upper side of the waterproof sheet 12 and the mesh pipe 13. The size of the mesh (the size of the holes in the mesh) of the drainage net 14 is smaller than the size of the clay pebbles Y used in the medium 15.

In this manner, in this embodiment, the drainage net 14 with a size of the mesh that does not allow the clay pebbles Y to pass through is disposed between the medium 15 and the drainage path (second recess 11b). Accordingly, it is possible to allow the nutrient solution supplied to the medium 15 to pass to the drainage path while preventing the clay pebbles Y from falling into the drainage path.

The medium 15 is a medium for hydroponics formed by filling clay pebbles Y as the planting material. Irregularly shaped clay pebbles with a diameter of one grain varying in a range of 2 to 4 mm are adopted as the clay pebbles Y used to form the medium 15. In the example of this embodiment, the clay pebbles Y are filled to the extent that the first recess 11a is almost completely buried.

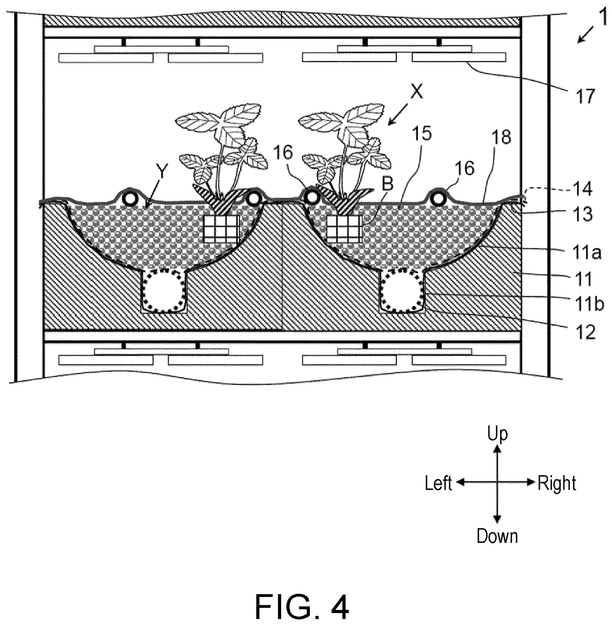

The irrigation tube 16 is a tube (tubular member) for irrigation extending in the front-rear direction, and in the example of this embodiment, two irrigation tubes 16 are disposed separated in the left-right direction without interfering with strawberry seedlings X (refer to FIG. 4). One irrigation tube 16 is disposed near the left edge of the medium 15, and the other irrigation tube 16 is disposed at a position slightly to the right on the upper side of the medium 15.

The lighting device 17 is a device that realizes lighting using, for example, LEDs, and is disposed near the top plate of each tier to mainly irradiate light downward. The lighting device 17 is capable of switching the lighting on/off, and the period when lighting is provided corresponds to the light period, which promotes photosynthetic activity of strawberries.

### [Overview of cultivation method using plant cultivation system]

Next, a cultivation process (cultivation method) of strawberries using the plant cultivation system 1 described above will be described with reference to a flowchart shown in FIG. 3.

First, seeds of strawberries are sown in a seedling raising material, and hydroponic cultivation of the strawberries is started in the first cultivation room P1 (step S1). The seedling raising material in the example of this embodiment is formed in a small, approximately cubic shape with a recess for placing a seed provided on the upper side, is capable of allowing the rhizome of the plant to pass to the outer side, and is capable of being directly used for hydroponic cultivation even after the plant has grown into a seedling.

The hydroponic cultivation in the first cultivation room P1 described above is continued until a specific medium switching time comes (step S2). The medium switching time is set to a time from germination of strawberries to before fruit formation. When the medium switching time comes ("Y" in step S2), the strawberry seedlings are moved from the first cultivation room P1 to the cultivation container 11 in the second cultivation room P2, and hydroponic cultivation of strawberries is started in the second cultivation room P2 (step S3). When the medium switching time comes, instead of executing the process of step S3, hydroponic cultivation of strawberries using clay pebbles may also be started in the same cultivation room (in the example of this embodiment, the first cultivation room P1).

More specifically, the strawberry seedlings X grown in the first cultivation room P1 are transferred to the second cultivation room P2 together with the seedling raising materials X1, and then are planted in the medium 15 in the cultivation container 11 with the seedling raising materials X1 still attached. The strawberry seedlings X may also be planted in the medium 15 with the seedling raising materials X1 removed. In addition, after the strawberry seedlings X are planted, a mulching sheet 18 is disposed to cover the upper side of the medium 15.

FIG. 4 shows the cultivation shelf 1 in a state in which the mulching sheet 18 is disposed after the strawberry seedlings X are planted, viewed from the same viewpoint as FIG. 2. As shown in FIG. 4, in the example of this embodiment, the strawberry seedling X is planted in the medium 15 in a state in which the seedling raising material X1 is disposed to be pressed against the wall on the inner side in the left-right direction of the first recess 11a (e.g., left wall in the case of the first recess 11a in the cultivation container 11 on the right side).

As strawberries grow, the rhizome called the crown develops and extends, and accordingly, in the case of this embodiment, when strawberries are cultivated for about 9 months, the crown grows to about 10 cm. Thus, in this embodiment, by planting the strawberry seedlings X toward the inner side in the left-right direction, the plant bodies of strawberries are prevented from protruding outside from the cultivation container 11 and becoming suspended in the air. In addition, strawberries only grow new roots from the upper part of the crown (the boundary between leaves and rhizome), and cannot develop new roots unless the crown is constantly in contact with the medium 15. Considering this point, in this embodiment, the strawberry seedlings X are planted toward the inner side in the left-right direction upon calculation such that the crown continues to touch the medium 15 constantly in the cultivation period.

In addition, in the medium 15, multiple strawberry seedlings X are planted at intervals of 200 mm in the front-rear direction. The mulching sheet 18 is a sheet with a white upper surface and a black lower surface (the surface facing the medium 15), and is disposed to cover most of the upper side of the medium 15 while avoiding interference with the strawberry seedlings X. The mulching sheet 18 facilitates maintaining the medium 15 at an appropriate temperature and an appropriate humidity, and serves a role of more reliably suppressing the growth of algae. By configuring the upper surface of the mulching sheet 18 to be white, the reflected light of the light from the lighting device 17 is effectively utilized, and an effect of promoting photosynthesis in the strawberry seedlings X is obtained.

After hydroponic cultivation of strawberries in the second cultivation room P2 is started, various measures including nutrient solution supply, environmental temperature control, and pollination are implemented to properly grow the strawberries (step S4). Hereinafter, these measures will be described.

### [Measure of nutrient solution supply] (step S41)

In the hydroponic cultivation in the second cultivation room P2, a process of regularly supplying a nutrient solution, which serves as nutrients for strawberries, to the medium 15 is performed. More specifically, a process of flowing the nutrient solution generated in the mixing tank 4 described above into the irrigation tubes 16 is performed. Accordingly, the nutrient solution flows out from multiple drip holes provided at the irrigation tubes 16, and the nutrient solution is supplied to the upper side of the medium 15. In this manner, in this embodiment, the nutrient solution can be supplied in the form of top watering.

The irrigation tube 16 in the example of this embodiment has multiple drip holes provided at intervals of 150 mm in the front-rear direction. Since the interval of planting positions of the strawberries is 200 mm as described above, by using the irrigation tubes 16, approximately two drip holes can be correspondingly provided per strawberry plant to perform top watering of the nutrient solution.

In addition, the nutrient solution supplied to the medium 15 by top watering may be trapped using the trapping member 5 described above, and the nutrient solution may be temporarily stored in a region toward the lower side of the medium 15. Accordingly, in this embodiment, top watering of the nutrient solution is performed, and bottom watering of the nutrient solution is also performed as needed. In the example of this embodiment, the shape and the size of the trapping member 5 are appropriately set to realize bottom watering of the nutrient solution at a water depth of about 70 mm. In addition, in the example of this embodiment, once every two weeks, the trapping member 5 is removed to drain all the nutrient solution from the cultivation container 11 and perform resetting.

### [Measure of environmental temperature control] (step S42)

Furthermore, in the hydroponic cultivation in the second cultivation room P2, it is important to control the environmental temperature (mainly the temperature of the cultivation shelf 1), which affects the growth of strawberries, to an appropriate temperature. Thus, in this embodiment, the environmental temperature is controlled mainly using the air conditioner 2. When controlling the environmental temperature, the heat of the lighting device 17 may also be utilized.

In addition, the air conditioner 2 is equipped with an air conditioning filter similar to a general air conditioner, and with the air conditioning filter, it is possible to remove foreign matter in the air to some extent. However, in the second cultivation room P2, there is more foreign matter such as pollen and dust of clay pebbles Y compared to the general air environment, which tends to lead to problems such as clogging of the air conditioning filter.

Thus, in this embodiment, a pre-filter is installed near the air conditioner 2 indoors in the second cultivation room P2. The pre-filter is disposed outside of the air conditioning filter as viewed from the main body of the air conditioner 2, and the air of the second cultivation room P2 that is drawn into the air conditioner 2 passes through the pre-filter before passing through the air conditioning filter. While dust of clay pebbles is capable of passing through the air conditioning filter of the air conditioner 2, the pre-filter has a finer mesh specification (applicable even if the particle size of foreign matter in the air is small) than the air conditioning filter and is also capable of effectively removing dust of clay pebbles. Accordingly, foreign matter in the air can be removed as much as possible with the pre-filter, and it is possible to minimize clogging and the like of the air conditioning filter. The pre-filter is configured to be cleaned or replaced more easily than the air conditioning filter, and the filter function can be maintained by cleaning or replacement with a new one.

### [Measure of pollination] (step S43)

Furthermore, in the hydroponic cultivation in the second cultivation room P2, when it is time for pollination of strawberries, flies (pollinators) are used to realize pollination. In this embodiment, flies are not used during cultivation in the first cultivation room P1 in which pollinators are not required as pollination is not performed, and flies are used during cultivation in the second cultivation room P2 in which pollination is performed. In this manner, in this embodiment, the use of flies is switched before and after the medium switching time.

In addition, it is also conceivable to use bees for pollination, but in this embodiment, considering the difficulty in controlling bees, flies are used instead of bees. Bees recognize flowers by visual recognition, which requires ultraviolet light. However, since the light in the cultivation room does not include ultraviolet light, bees cannot recognize flowers in the cultivation room and cannot perform pollination activities. In this regard, since flies recognize flowers by smell, flies reach and feed on flowers as long as there are flowers, even without ultraviolet light. At this time, with pollen adhering to the flies' bodies, pollination is made possible.

### [Measure of fruit harvesting] (step S44)

When strawberry fruits have sufficiently grown by hydroponic cultivation in the second cultivation room, harvesting of fruits is performed. The harvesting work may be performed in order, starting from sufficiently ripened fruits. Upon completion of harvesting of fruits, the hydroponic cultivation of plants in the second cultivation room P2 is ended.

Afterward, to reuse the used clay pebbles Y in the medium 15 for a next-time hydroponic cultivation, a process is executed to remove the used clay pebbles Y used this time from the cultivation container 11 to be dried and then baked, and return the baked clay pebbles Y to the cultivation container 11 (step S5).

More specifically, after the used clay pebbles Y used this time are transferred to the clay pebble baking facility P3 described above, the used clay pebbles Y are first dried by heating using a kiln. Then, the dried clay pebbles Y are heated at a higher temperature and baked. In this manner, in this embodiment, considering the risk that clay pebbles Y in a state containing moisture may explode upon baking, explosion is prevented by drying the clay pebbles Y before baking.

Generally, in the case of reusing clay pebbles in hydroponic cultivation, the used clay pebbles are washed before reuse, but washing alone cannot sufficiently remove organic matter attached to the clay pebbles, which may adversely affect the next-time hydroponic cultivation. In contrast, in the case of this embodiment, the baking process carbonizes organic matter (strawberry roots, components of the nutrient solution, etc.) accumulated on the clay pebbles Y, the organic matter attached to the clay pebbles Y can be sufficiently removed, and it is possible to prevent such problems.

The baked clay pebbles Y are transferred to the second cultivation room P2 and filled in the cultivation container 11 as shown in FIG. 2, and are reused as the planting material of the medium 15 in the next-time hydroponic cultivation. In this manner, by recycling the clay pebbles Y as the medium to be used in the next-time cultivation, strawberries can be cultivated under the same medium conditions as this time. In addition, by recycling the clay pebbles Y, not only is it possible to reduce the cost for procuring new clay pebbles, but it is also possible to contribute to reduction of waste and mitigation of environmental impact.

Upon ending of the processes so far, the cultivation process of strawberries this time is basically completed. When implementing a next-time hydroponic cultivation, the processes from step S1 onward may be executed again.

As described above, the cultivation method of a plant according to this embodiment includes growing a plant from a seed by hydroponics until a specific medium switching time from germination to before fruit formation, and, when the medium switching time comes, transferring the plant to a medium 15 for hydroponics using clay pebbles Y as a planting material to continue growing the plant by hydroponics.

Thus, according to the cultivation method of a plant related to this embodiment, it is suitable for cultivation of plants in a plant factory, and it is easy to obtain high-quality fruits. More specifically, since the cultivation method of this embodiment is a method of growing plants by hydroponics, it is not required to prepare soil for growing plants, and plant diseases and pests originating from soil can also prevented. Further, since it is easy to stabilize the quality of plants, the cultivation method is very suitable as a cultivation approach in a plant factory.

However, since there is a problem that algae easily develop in general hydroponic cultivation, if hydroponic cultivation is continued directly after fruit formation, there is a risk that algae odor may be attached to the fruits, and high-quality fruits cannot be obtained. Thus, as a result of investigating countermeasures for this problem, the applicant has found that when hydroponic cultivation is performed with a medium using clay pebbles as the planting material, algae development is suppressed.

Based on this, in this embodiment, clay pebbles Y are used in the medium 15, and as a result, algae development is suppressed, attachment of algae odor to fruits is prevented, and it is possible to obtain high-quality fruits. The medium 15 using clay pebbles Y as the planting material is suitable as a medium for seedlings grown to some extent, but is not suitable as a medium for plants still in the stage of seeds or in a stage where growth has hardly progressed. Thus, in the cultivation method of this embodiment, the plants are moved to the medium 15 for hydroponics using clay pebbles Y at a timing from germination to before fruit formation.

Regarding the more specific time of this timing, an appropriate time may be adopted according to the type of the plant and various other conditions. In the cultivation example of strawberries of this embodiment, the timing of moving the plants to the medium 15 for hydroponics using clay pebbles Y is configured to be a time of approximately 45 to 50 days after germination, a time when the number of expanded true leaves of the seedlings reaches 7 to 8, or a time when the height of the seedlings reaches approximately 15 cm.

In addition, for example, in the case of performing hydroponic cultivation with a medium using diatomaceous earth, the diatomaceous earth becomes very heavy due to a large water supply amount, and the weight load on the cultivation shelf may become too large. In addition, when using diatomaceous earth, there is a problem that a lot of dirt is generated when removing the diatomaceous earth from the cultivation shelf to prevent continuous cropping obstacles. In this regard, in the case of using clay pebbles Y as the medium 15 as in this embodiment, it is also possible to prevent such problems.

Furthermore, in the cultivation method of a plant according to this embodiment, the planting material includes clay pebbles Y of different sizes mixed together. Accordingly, it is possible to grow the plants more stably.

In other words, if clay pebbles of almost equivalent sizes are used, it becomes difficult for the medium 15 to compact, and there is a risk that it may become difficult for the root part of the plants to stabilize. In this regard, in the case of intentionally adopting the planting material with clay pebbles Y of different sizes mixed together as in this embodiment, for example, smaller clay pebbles Y come to fit into the gaps between larger clay pebbles Y, the gaps in the medium 15 become more complex and non-uniform, compaction of the medium 15 becomes good, and thus it becomes easy for the root part of the plants to stabilize. Particularly, in the case of plants of a type that develops irregular roots (fibrous roots) such as strawberries, by using a medium 15 with non-uniform gaps, it becomes very easy for the root part to stabilize.

In addition, as in this embodiment, by configuring the gaps in the medium 15 to be more non-uniform, it is possible to recreate a medium 15 that is closer to natural soil. Accordingly, even with hydroponics, plants can be grown in an environment as close to nature as possible, and it becomes possible to stabilize the growth of plants. In this embodiment, regarding the size range (a range from the minimum value to the maximum value of the size) of the clay pebbles Y, it has been found that a range of 2 to 4 mm is particularly appropriate, so the sizes of the clay pebbles Y are configured to differ within this range. In addition, the size distribution of the clay pebbles Y is desirably as unbiased as possible within the range of 2 to 4 mm, and, upon dividing this range into multiple equal parts, the number of clay pebbles Y belonging to each range is desirably approximately equal. In the size distribution of the clay pebbles Y, regarding the number of clay pebbles Y belonging to each range (each range with a difference of 0.2 mm between the upper limit and the lower limit of size) in the case of dividing the range of 2 to 4 mm into 10 equal parts, preferably, the maximum value of the number of clay pebbles Y is twice or less of the minimum value, and more preferably, the maximum value of the number of clay pebbles Y is 1.5 times or less of the minimum value. However, the size range of the clay pebbles Y may be an appropriate range according to the type of the plant and various other conditions, and may also be, for example, a range of 2 to 5 mm.

In addition, compared to using clay pebbles with a defined shape such as a spherical shape, in the case of using irregularly shaped clay pebbles with the shape undefined, the gaps in the medium 15 become more complex and non-uniform, compaction of the medium 15 becomes good, and it becomes possible to grow plants more stably. Thus, in this embodiment, irregularly shaped clay pebbles are adopted as the clay pebbles Y.

Although the embodiments of the present invention have been described above, the configuration of the present invention is not limited to the above embodiments, and various modifications may be made without departing from the gist of the invention. The technical scope of the present invention is not indicated by the description of the above embodiments but by the claims, and should be understood to include all modifications belonging to meanings equivalent to and within the scope of the claims.

### Industrial Applicability

The present invention may be utilized for cultivation of plants such as strawberries.

### Reference Signs List

- 1: cultivation shelf
- 2: air conditioner
- 3: standing water tank
- 4: mixing tank
- 5: trapping member
- 6: drainage mechanism
- 11: cultivation container
- 12: waterproof sheet
- 13: mesh pipe
- 14: drainage net
- 15: medium
- 16: irrigation tube
- 17: lighting device
- 18: mulching sheet
- P1: first cultivation room
- P2: second cultivation room
- P3: clay pebble baking facility
- X: strawberry seedling
- Y: clay pebble

## Claims

1. A cultivation method, which is a cultivation method of a plant, comprising:
growing the plant from a seed by hydroponics, until a specific medium switching time from germination to before fruit formation; and
in response to coming of the medium switching time, moving the plant to a medium taking clay pebbles as a planting material to continue growing the plant by hydroponics.

2. The cultivation method according to claim 1, wherein the planting material comprises the clay pebbles of different sizes mixed together.

3. The cultivation method according to claim 2, wherein the planting material comprises the clay pebbles, which are irregularly shaped and of different sizes within a range of 2 to 4 mm, mixed together.

4. The cultivation method according to claim 1, comprising a process of baking used clay pebbles, wherein
the baked clay pebbles are reused as the planting material.

5. The cultivation method according to claim 1, wherein after the plant is moved to the medium, pollination is performed using a pollinator.

6. The cultivation method of a plant according to claim 1, wherein the plant is strawberry.

7. A cultivation system, which is a cultivation system used for the cultivation method according to any one of claims 1 to 6, comprising:
the medium, and a drainage path disposed below the medium, wherein
a drainage net with a size of a mesh that does not allow the clay pebbles to pass through is disposed between the medium and the drainage path.

8. A cultivation system, which is a cultivation system provided in a room having an air conditioner and used for the cultivation method according to any one of claims 1 to 6,
the cultivation system being provided with a pre-filter with a finer mesh than an air conditioning filter of the air conditioner, wherein
air in the room that is drawn into the air conditioner passes through the pre-filter before passing through the air conditioning filter.
